# EUROPEAN PATENT SPECIFICATION

(11) **EP 2 966 711 B1**
(45) Date of publication and mention of the grant of the patent: **22.05.2019**
(21) Application number: 14745653.7
(22) Date of filing: 03.02.2014
(51) Int. Cl.: H01M 4/36, H01M 4/525, H01M 4/505, H01M 4/131, H01M 10/052

(54) **CATHODE ACTIVE MATERIAL FOR LITHIUM SECONDARY BATTERY, METHOD FOR MANUFACTURING THE SAME, AND LITHIUM SECONDARY BATTERY USING THE SAME**
KATHODENAKTIVMATERIAL FÜR EINE LITHIUMSEKUNDÄRBATTERIE, VERFAHREN ZUR HERSTELLUNG DAVON UND LITHIUMSEKUNDÄRBATTERIE DAMIT
MATIÈRE DE CATHODE ACTIVE POUR UNE BATTERIE SECONDAIRE AU LITHIUM, SON PROCÉDÉ DE FABRICATION ET BATTERIE SECONDAIRE AU LITHIUM L'UTILISANT

(30) Priority: 31.01.2013 KR 20130011138
(43) Date of publication of application: 13.01.2016
(73) Proprietor: IUCF-HYU (Industry-University Cooperation Foundation Hanyang University), Seoul 133-791 (KR)
(72) Inventor: SUN, Yang-Kook, Seoul 135-280 (KR); NOH, Hyung-Joo, Bucheon-si Gyeonggi-do 420-721 (KR); LEE, Sang-Hyuk, Busan 604-030 (KR)
(74) Representative: J A Kemp
(86) International application number: PCT/KR2014/000925
(87) International publication number: WO 2014/119973

(56) References cited:
- EP-A1- 2 237 348
- KR-A- 20050 088 788
- KR-A- 20060 084 821
- KR-A- 20120 121 235
- KR-B1- 100 752 703
- US-A1- 2011 076 556
- YANG-KOOK SUN ET AL: "Synthesis and Characterization of Li[(Ni0.8Co0.1Mn0.1)0.8(Ni0.5Mn0.5)0.2]O2 with the Microscale Core-Shell Structure as the Positive Electrode Material for Lithium Batteries", JOURNAL OF THE AMERICAN CHEMICAL SOCIETY, AMERICAN CHEMICAL SOCIETY, US, vol. 127, 28 September 2005 (2005-09-28), pages 13411-13418, XP002612723, ISSN: 0002-7863, DOI: 10.1021/JA053675G [retrieved on 2005-08-31]
- LEE K S ET AL: "Synthesis and electrochemical performances of core-shell structured Li[(Ni1/3Co1/3Mn1/3)0.8(Ni1/2Mn1/2)0.2]O2 cathode material for lithium ion batteries", JOURNAL OF POWER SOURCES, ELSEVIER SA, CH, vol. 195, no. 18, 15 September 2010 (2010-09-15), pages 6043-6048, XP027148140, ISSN: 0378-7753 [retrieved on 2010-02-06]
- LI C ET AL: "Cathode materials modified by surface coating for lithium ion batteries", ELECTROCHIMICA ACTA, ELSEVIER SCIENCE PUBLISHERS, BARKING, GB, vol. 51, no. 19, 20 May 2006 (2006-05-20), pages 3872-3883, XP028028200, ISSN: 0013-4686, DOI: 10.1016/J.ELECTACTA.2005.11.015 [retrieved on 2006-05-20]
- MARTHA S K ET AL: "A comparative study of electrodes comprising nanometric and submicron particles of LiNi0.50Mn0.50O2, LiNi0.33Mn0.33Co0.33O2, and LiNi0.40Mn0.40Co0.20O2 layered compounds", JOURNAL OF POWER SOURCES, ELSEVIER SA, CH, vol. 189, no. 1, 2 October 2008 (2008-10-02), pages 248-255, XP025982693, ISSN: 0378-7753, DOI: 10.1016/J.JPOWSOUR.2008.09.090 [retrieved on 2008-10-02]

## Description

### TECHNICAL FIELD

The present invention relates to a cathode active material for a lithium secondary battery, a method for manufacturing the same, and a lithium secondary battery using the same. More particularly, the present invention relates to a cathode active material capable of improving cycle life and charge/discharge characteristics of a lithium secondary battery by means of at least one coating layer formed on a surface of the cathode active material, a method for manufacturing the same, and a lithium secondary battery using the same.

### BACKGROUND ART

Recently, portable electronic products such as a camcorder, a portable phone and a notebook personal computer have been generally used with the rapid development of electronic, communication and computer industries, so light, long-lifetime and high-reliable batteries have been demanded. In particular, a lithium secondary battery has an operating voltage of 3.7V or more, so an energy density per a unit weight of the lithium secondary battery is higher than those of a nickel-cadmium battery and a nickel-hydrogen battery. Thus, the lithium secondary battery has been increasingly demanded as a power source for driving the portable electronic, information and communication devices.

Recently, in U.S.A., Japan, and Europe, researches have been actively conducted for a power source of a hybrid electric car which can be formed by hybridizing an internal-combustion engine and the lithium secondary battery. A plug-in hybrid electric vehicle (P-HEV) battery used in a car traveling 60 miles or less a day has been actively developed primarily in U.S.A. The P-HEV battery has characteristics closer to those of an electric car, so it is required to develop a high-capacity battery. In particular, it may be required to develop a cathode material having a tap density of 2.0g/cc or more and a high-capacity of 230mAh/g or more.

LiCoO₂, LiNiO₂, LiMnO₂, LiMn₂O₄, and LiFePO₄ correspond to cathode materials which are commercialized or still under development. Among them, LiCoO₂ is an excellent material having a stable charge/discharge characteristic, excellent electronic conductivity, a high battery voltage, high stability, and an even discharge voltage characteristic. However, since little Co is deposited and Co is expensive and poisonous to a human body, it is required to develop a now cathode material. In addition, a crystal structure of Co is unstable in charging by delithiation, so a thermal characteristic of Co is very poor.

To solve these, a transition metal element may be substituted for a portion of nickel to move a heat-generating start temperature to a high-temperature, or a heat-generating peak may become broad to prevent a sharp increase in temperature. However, the expected results have failed to come.

In other words, LiNi₁₋ₓCoₓO₂ (x=0.1-0.3) obtained by substituting cobalt for the portion of nickel has excellent charge/discharge and cycle life characteristics but does not have thermal stability. In addition, European Patent No. 0872450 discloses LiₐCo_{b}Mn_{c}M_{d}Ni_{1-(b+c+d)}O₂ (M=B, Al, Si. Fe, Cr, Cu, Zn, W, Ti, Ga) obtained by substituting Co, Mn and another nickel for nickel. However, the thermal stability problem of a Ni-based material does not solved.

To solve this problem, Korean patent publication No. 10-2005-0083869 discloses a lithium transition metal oxide in which a metal composition has a concentration gradient. According to this method, an internal material having a constant composition is synthesized, and a material having a different composition is coated on the internal material to manufacture a double layer. Thereafter, the double layer is mixed with lithium salt, and the mixture is thermally treated. A lithium transition metal oxide may be used as the internal material. However, a metal composition of a cathode active material is discontinuously changed between the internal material and external material which are generated, so an internal structure is unstable.

In addition, Korean Patent Registration No. 10-0693822 discloses a cathode active material having a substituted result concentration gradient. According to this, a concentration gradient is formed at an interface region of a core and a coating layer by coating or substitution to improve quality of a surface. However, the concentration gradient is not formed on the whole.

Yang-Kook Sun et al, JACS, vol. 127, 28 September 2005, pages 13411-13418 describes "Synthesis and Characterization of Li[(Ni_{0.8}Co_{0.1}Mn_{0.1})_{0.8}(Ni_{0.5}Mn_{0.5})_{0.2}]O₂ with the Microscale Core-Shell Structure as the Positive Electrode Material for Lithium Batteries".

Lee K S et al, Journal of Power Sources, vol. 195, no. 18, 15 September 2010, pages 6043-6048 describes "Synthesis and electrochemical performances of core-shell structured Li[(Ni_{1/3}Co_{1/3}Mn_{1/3})_{0.8}(Ni_{1/2}Mn_{1/2})_{0.2}]O₂ cathode material for lithium ion batteries".

Li C et al, Electochemica Acta, vol. 51, no. 19, 20 May 2006, pages 3872-3883 describes "Cathode materials modified by surface coating for lithium ion batteries".

### DISCLOSURE OF THE INVENTION

### TECHNICAL PROBLEM

The present invention provides a cathode active material having a new structure including at least one coating on a surface, a method for manufacturing the same, and a lithium secondary battery including the same.

### TECHNICAL SOLUTION

The invention provides a cathode active material for a lithium secondary battery,
wherein at least one coating layer is formed on a surface of the cathode active material, the cathode active material comprising:
a core portion represented by the following chemical formula 1; and
a surface portion represented by the following chemical formula 2,

   [chemical formula 1] Liₐ₁M1ₓ₁M2_{y1}M3_{z1}M4_{w}O_{2+δ},

   [chemical formula 2] Liₐ₂M1ₓ₂M2_{y2}M3_{z2}M4_{w}O_{2+δ},

   where, in the chemical formulas 1 and 2:
   M1, M2, and M3 are selected from the group consisting of Ni, Co, Mn, and any combination thereof, M4 is selected from the group consisting of Fe, Na, Mg, Ca, Ti, V, Cr, Cu, Zn, Ge, Sr, Ag, Ba, Zr, Nb, Mo, Al, Ga, B, and any combination thereof;
   0<a1≤1.1, 0<a2≤1.1, 0≤x1≤1, 0≤x2≤1, 0≤y1≤1, 0≤y2≤1, 0≤z1≤1, 0≤z2≤1, 0≤w≤0.1, 0.0≤δ≤0.5, 0<x1+y1+z1≤1, 0<x2+y2+z2≤1, y1≤y2, and z2≤z1;
   0≤ |x2-x1| ≤0.4, 0.01≤ |y2-y1| ≤0.4, 0.1≤ |z2-z1| ≤0.5, 0.15≤x2≤0.35, 0.01≤y2≤0.3, and 0.5≤z2≤0.7; and
   M1 is Co, M2 is Mn, and M3 is Ni; or
   M1 is Mn, M2 is Co, and M3 is Ni; or
   M1 is Ni, M2 is Co, and M3 is Mn;
   characterised in that the coating layer includes Li₂ZrO₃ or Li₂SeO₄.

In an embodiment of the present invention, the coating layer may be single-layered or multi-layered and may have an island shape. If the coating layer has a layered shape, the coating layer can be uniformly coated. If the coating layer has the island shape, the coating layer may selectively react with a specific active point of the surface of the active material. Thus, side reaction can be controlled and electrical characteristics and thermal stability can be improved.

Electrochemical characteristics of the cathode active material of the present invention may be varied depending on a content of the coating layer. If a coating material is added, a coating element may be physically or chemically combined with the inside of a particle or between particles. Thus, when particles are firstly formed during a subsequent thermal treatment (e.g., in an air atmosphere), particles may be prevented from being bonded to each other and growth of the particles may be inhibited.

In an embodiment of the present invention, a thickness of the coating layer may be in a range of 1 nm to 150nm.

In an embodiment of the present invention, the cathode active material for the lithium secondary battery including the core portion represented by the chemical formula 1 and the surface portion represented by the chemical formula 2 may be prepared in the following manner:
A thickness of the core portion may be in a range of 10% to 70% of a total size of a particle of the cathode active material for the lithium secondary battery, and
a concentration of metal ions from the core portion to the surface portion may be uniformly represented by the chemical formula 2.

In an embodiment of the present invention, the cathode active material for the lithium secondary battery including the core portion represented by the chemical formula 1 and the surface portion represented by the chemical formula 2 may be prepared in the following manner:
A thickness of the core portion is in a range of 10% to 70% of a total size of a particle of the cathode active material for the lithium secondary battery,
a thickness of the surface portion is in a range of 1% to 5% of the total size of the particle of the cathode active material for the lithium secondary battery, and
concentrations of M1, M2, and M3 have continuous concentration gradients from the core portion to the surface portion.

In an embodiment of the present invention, the cathode active material for the lithium secondary battery including the core portion represented by the chemical formula 1 and the surface portion represented by the chemical formula 2 may be prepared in the following manner:
A thickness of the core portion and a thickness of the surface portion range from 1% to 5% of a total size of a particle of the cathode active material for the lithium secondary battery, and
concentrations of M1, M2, and M3 have continuous concentration gradients from the core portion to the surface portion.

In an embodiment of the present invention, the cathode active material for the lithium secondary battery including the core portion represented by the chemical formula 1 and the surface portion represented by the chemical formula 2 may be prepared in the following manner:
The concentrations of M1 and M2 have continuously increasing concentration gradients from the core portion to the surface portion, and the concentration of M3 has continuously decreasing concentration gradient from the core portion to the surface portion.

In an embodiment of the present invention, the cathode active material for the lithium secondary battery including the core portion represented by the chemical formula 1 and the surface portion represented by the chemical formula 2 may be prepared in the following manner:
A thickness of the core portion and a thickness of the surface portion range from 1% to 5% of a total size of a particle of the cathode active material for the lithium secondary battery,
a concentration of M1 is uniform from the core portion to the surface portion, and
concentrations of M2 and M3 have continuous concentration gradients from the core portion to the surface portion.

At this time, in an embodiment of the present invention, the concentration of M3 may decrease from 0.90 molar ratio of the core portion to 0.65 molar ratio of the surface portion and the concentration of M2 may increase from 0.05 molar ratio of the core portion to 0.10 molar ratio of the surface portion. The concentration of M1 may increase from 0.05 molar ratio of the core portion to 0.25 molar ratio of the surface portion.

In another embodiment of the present invention, the concentration of M3 may be 0.75 molar ratio at the core portion but may decrease to 0.55 molar ratio at the surface portion. The concentration of M2 may increase from 0 molar ratio of the core portion to 0.20 molar ratio of the surface portion. The concentration of M1 may be uniformly 0.25 molar ratio at the core portion and the surface portion.

In an embodiment of the present invention, a particle size of the cathode active material for the lithium secondary battery is in a range of 0.1 µm to 1 µm, and more particularly, in a range of 0.1 µm to 0.6 µm. If the particle size of the cathode material is smaller than 0.1 µm, a tap density may be reduced. If the particle size of the cathode material is larger than 1.0 µm, the tap density may increase. However, since the particle size is too large, insertion and desorption distances of lithium ions are long in the structure to deteriorate electrochemical characteristics of a battery.

In an embodiment of the present invention, the cathode active material for the lithium secondary battery including the core portion represented by the chemical formula 1 and the surface portion represented by the chemical formula 2 may be prepared in the following manner: the M1 is Co, the M2 is Mn, and the M3 is Ni.

In an embodiment of the present invention, the cathode active material for the lithium secondary battery including the core portion represented by the chemical formula 1 and the surface portion represented by the chemical formula 2 may be prepared in the following manner: the M1 is Mn, the M2 is Co, and the M3 is Ni.

In an embodiment of the present invention, the cathode active material for the lithium secondary battery including the core portion represented by the chemical formula 1 and the surface portion represented by the chemical formula 2 may be prepared in the following manner: the M1 is Ni, the M2 is Co, and the M3 is Mn.

Embodiments of the present invention also provide a method for manufacturing the cathode active material for a lithium secondary battery according to the invention. The method includes:
synthesizing a coating layer source material;
forming a cathode active material precursor for a lithium secondary battery;
mixing the coating layer source material and lithium salt with the cathode active material precursor for the lithium secondary battery to form a mixture; and
baking the mixture.

Embodiments of the present invention also provide a method for manufacturing the cathode active material for a lithium secondary battery according to the invention. The method includes:
synthesizing a coating layer source material;
forming a cathode active material for a lithium secondary battery;
mixing the coating layer source material and the cathode active material with a solvent to form a mixture;
coating and drying the mixture; and
baking the coated and dried mixture.

In an embodiment of the manufacturing method of the present invention, the solvent may be selected from a group consisting of distilled water, methanol, ethanol, and any combination thereof.

In an embodiment of the manufacturing method of the present invention, the coating layer source material may be mixed at a ratio of 0.1 wt% to 1.00 wt% with respect to 100 wt% of the cathode active material.

If a mixing ratio of the coating layer source material is lower than 0.1 wt%, the effect by coating may not be shown. If a mixing ratio of an oxide of the coating element is higher than 1.00 wt%, the coating layer may be too thick to disturb insertion and desorption of lithium ions. Thus, conductivity may be deteriorated.

Embodiments of the present invention also provide a lithium secondary battery including the cathode active material on which at least one coating layer is formed according to the invention.

### ADVANTAGEOUS EFFECTS

The cathode active material of the present invention includes at least one coating layer which includes Li₂ZrO₃ or Li₂SeO₄ and is formed on the surface of the cathode active material, and thus, the stability and electrical conductivity of the cathode active material are improved. In addition, the battery including cathode active material has excellent charge/discharge and cycle life characteristics and excellent thermal stability.

### BRIEF DESCRIPTION OF THE DRAWINGS

FIGS. 1, 5, and 10 show results of x-ray direction (XRD) measurement of cathode active materials manufactured in some embodiments of the present invention and some comparisons.
FIGS. 2, 6, 8, 11, 13, 15, 17, and 20 show charge/discharge characteristics of cells (batteries) using cathode active materials manufactured in some embodiments of the present invention, some reference embodiments and some comparisons.
FIGS. 3, 7, 9, 12, 14, 16, 18, and 21 show cycle life characteristics of cells (batteries) using cathode active materials manufactured in some embodiments of the present invention, some reference embodiments and some comparisons.
FIGS. 4 and 19 show results of differential scanning calorimetry (DSC) analysis of cathodes manufactured using cathode active materials manufactured in some embodiments of the present invention, some reference embodiments and some comparisons.

### BEST MODE FOR CARRYING OUT THE INVENTION

Hereinafter, exemplary embodiments of the present invention will be described in detail.

### [Manufacture example]

### [Manufacture example 1] Manufacture of an active material precursor having a core-shell structure

To manufacture a particle including a core having a constant concentration and a shell having a constant concentration, an aqueous metal salt solution (2.4 M concentration) for forming a core portion was prepared by mixing nickel sulfate, cobalt sulfate, and manganese sulfate with each other at a molar ratio of 90:5:5, and an aqueous metal salt solution for forming a surface portion was prepared by mixing nickel sulfate, cobalt sulfate, and manganese sulfate with each other at a molar ratio of 65:10:25. After 4 liter distilled water was provided into a co-precipitation reactor (having capacity of 4L and including a rotary motor with an output power of 80W), a nitrogen gas was supplied into the reactor at a rate of 0.5 liter/min to remove dissolved oxygen and the distilled water was stirred at a speed of 1000 rpm in the reactor maintained at a temperature of 50°C.

The aqueous metal salt solution for forming the core portion was provided into the reactor to form a core, and then, the aqueous metal salt solution for forming the surface portion was provided into the reactor at a rate of 0.3 liter/min to form an active material precursor including the core having the constant concentration and the shell having the constant concentration.

### [Manufacture example 2] Manufacture of an active material precursor having a core-shell structure including a shell having a concentration gradient

An aqueous metal salt solution (2.4 M concentration) for forming a core portion was prepared by mixing nickel sulfate, cobalt sulfate, and manganese sulfate with each other at a molar ratio of 90:5:5, and an aqueous metal salt solution for forming a surface portion was prepared by mixing nickel sulfate, cobalt sulfate, and manganese sulfate with each other at a molar ratio of 55:15:30. The aqueous metal salt solution for forming the core portion was provided into the reactor to form a core, and then, the aqueous metal salt solution for forming the surface portion and the aqueous metal salt solution for forming the core portion were supplied at a rate of 0.3 liter/hour in the reactor while gradually changing a mixing ratio thereof. As a result, an active material precursor was manufactured to include the core having a constant concentration and a shell having a concentration gradient.

### [Manufacture example 3] Manufacture of an active material precursor having a gradient in concentration of metal ions throughout a particle

To manufacture a compound in which Mn, Ni and Co have a concentration fixed from a center to a surface, a decreasing concentration and an increasing concentration, respectively, an aqueous metal salt solution (2.4 M concentration) for forming a core portion was prepared by mixing nickel sulfate and manganese sulfate with each other at a molar ratio of 75:25, and an aqueous metal salt solution for forming a surface portion was prepared by mixing nickel sulfate, cobalt sulfate, and manganese sulfate with each other at a molar ratio of 55:20:25. The same method as described in the manufacture example 2, except for these features of the present example, was performed to manufacture an active material precursor.

### [Manufacture example 4] Manufacture of an active material precursor having two gradients in metal concentration

A shell having a concentration gradient and a certain thickness was formed using nickel sulfate, cobalt sulfate, and manganese sulfate mixed at a molar ratio of 98:00:02 as an aqueous metal salt solution for forming a core portion and using nickel sulfate, cobalt sulfate, and manganese sulfate mixed at a molar ratio of 85:05:10 as an aqueous metal salt solution for forming a surface portion, and then, a shell having a certain thickness was also formed using a solution obtained by mixing nickel sulfate, cobalt sulfate, and manganese sulfate mixed with each other at a molar ratio of 65:10:25. Thus, two gradients in concentration were formed in the shell. The same method as described in the manufacture example 1, except for these features of the present example, was performed to manufacture an active material precursor.

### [Manufacture example 5] Manufacture of an active material precursor having a core-shell structure

A solution obtained by mixing nickel sulfate, cobalt sulfate, and manganese sulfate at a molar ratio of 80:10:10 was used as an aqueous metal salt solution for forming a core portion, and a solution obtained by mixing nickel sulfate, cobalt sulfate, and manganese sulfate at a molar ratio of 50:20:30 was used as an aqueous metal salt solution for forming a surface portion. The same method as in the manufacture example 1, except for these features of the present example, was performed to manufacture an active material precursor.

### [Manufacture example 6] Manufacture of an active material precursor having a core-shell structure including a shell having a concentration gradient

A solution obtained by mixing nickel sulfate, cobalt sulfate, and manganese sulfate at a molar ratio of 85:05:10 was used as an aqueous metal salt solution for forming a core portion, and a solution obtained by mixing nickel sulfate, cobalt sulfate, and manganese sulfate at a molar ratio of 60:15:25 was used as an aqueous metal salt solution for forming a surface portion. The same method as in the manufacture example 2, except for these features of the present example, was performed to manufacture an active material precursor.

### [Manufacture example 7] Manufacture of an active material precursor having a gradient in concentration of metal ions throughout a particle

A solution obtained by mixing nickel sulfate, cobalt sulfate, and manganese sulfate at a molar ratio of 90:00:10 was used as an aqueous metal salt solution for forming a core portion, and a solution obtained by mixing nickel sulfate, cobalt sulfate, and manganese sulfate at a molar ratio of 54:15:31 was used as an aqueous metal salt solution for forming a surface portion. The same method as in the manufacture example 3, except for these features of the present example, was performed to manufacture an active material precursor.

### [Manufacture example 8] Manufacture of an active material precursor having two gradients in metal concentration

A shell having a concentration gradient and a certain thickness was formed using nickel sulfate, cobalt sulfate, and manganese sulfate mixed at a molar ratio of 96:00:04 as an aqueous metal salt solution for forming a core portion and using nickel sulfate, cobalt sulfate, and manganese sulfate mixed at a molar ratio of 80:05:15 as an aqueous metal salt solution for forming a surface portion, and then, a shell having a certain thickness was also formed using a solution obtained by mixing nickel sulfate, cobalt sulfate, and manganese sulfate mixed with each other at a molar ratio of 55:15:30. Thus, two gradients in concentration were formed in the shell. The same method as described in the manufacture example 1, except for these features of the present example, was performed to manufacture an active material precursor.

### [Manufacture example 9] Manufacture of an active material precursor having two gradients in metal concentration

A shell having a concentration gradient and a certain thickness was formed using nickel sulfate, cobalt sulfate, and manganese sulfate mixed at a molar ratio of 95:02:03 as an aqueous metal salt solution for forming a core portion and using nickel sulfate, cobalt sulfate, and manganese sulfate mixed at a molar ratio of 90:04:06 as an aqueous metal salt solution for forming a surface portion, and then, a shell having a certain thickness was also formed using a solution obtained by mixing nickel sulfate, cobalt sulfate, and manganese sulfate mixed with each other at a molar ratio of 67:09:24. Thus, two gradients in concentration were formed in the shell. The same method as described in the manufacture example 1, except for these features of the present example, was performed to manufacture an active material precursor.

### [Reference Embodiments 1 to 12] Manufacture of a cathode active material on which a PO4 coating layer is formed

### [Reference Embodiments 1 to 4]

(NH₄)₂HPO₄ was synthesized in a 4 liter continuous stirred-tank reactor (CSTR) under a condition of pH 5 and then was pulverized using a planetary mill to obtain nanometer-sized particles.

The obtained nano-particles of 0.25 wt% was mixed with LiNO₃ (as lithium salt) and the cathode active material precursor (99.75 wt%) of each of the manufacture examples 1 to 4. A dry ball milling coating process was performed on each of these mixtures at a speed of 100 rpm for 12 hours. At this time, a used container had a volume of 50 ml, and zirconia balls were used. The used zirconia balls had one ball of a diameter of 10mm and three balls of a diameter of 5mm. The cathode active materials coated with the nano-particles were thermally treated at 500°C for 5 hours in an air atmosphere to manufacture cathode active materials coated with PO₄ of reference embodiments 1 to 4.

### [Reference Embodiments 5 to 8]

Cathode active materials coated with PO₄ of reference embodiments 5 to 8 were manufactured by the same method as the reference embodiments 1 to 4 except for using NH₄PO₄ as a coating precursor and using the active material precursors of the manufacture examples 5 to 8.

### [Reference Embodiments 9 to 12]

Cathode active materials coated with PO₄ of reference embodiments 9 to 12 were manufactured by the same method as the reference embodiments 1 to 4 except for using H₃PO₄ as a coating precursor and using the active material precursors of the manufacture examples 1, 6, 3 and 8.

### [Comparison example 1 to 9]

Cathode active materials used as comparison examples 1 to 9 were manufactured by the same method as the embodiment 1 except for not using a coating precursor but using the active material precursors of the manufacture examples 1 to 9

### [Experimental example 1-1] XRD measurement

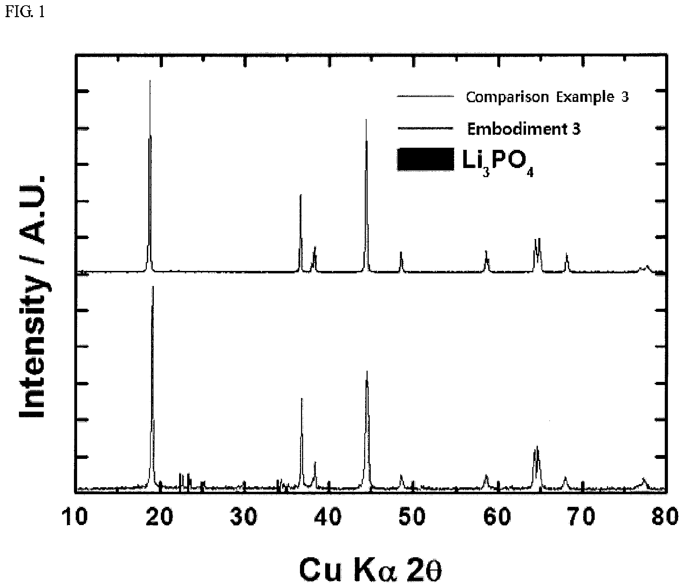

XRD measurement was performed to the cathode active materials manufactured in the reference embodiment 3 and the comparison example 3, and the results were shown in FIG. 1.

### [Manufacture example] Manufacture of coin cell

The cathode active material of each of the reference embodiments 1 to 12 and the comparison examples 1 to 9, super P used as a conductive material, and polyvinylidene fluoride (PVdF) used as a binder were mixed with each other at a weight ratio of 85:7.5:7.5 to form slurry.

The slurry was uniformly coated on aluminum foil having a thickness of 20 µm, and then, the aluminum foil coated with the slurry was vacuum-dried at 120°C to manufacture a cathode. A coin cell was manufactured using the manufactured cathode by a known method. At this time, lithium foil was used as an electrode opposite to the cathode, and a porous polyethylene layer (Celgard, LLC, No. Celgard 2300, a thickness: 25 µm) was used as a separator. In addition, the coin cell used a liquid electrolyte including a mixture solvent and 1.2M LiPF₆ dissolved in the mixture solvent. The mixture solvent was obtained by mixing ethylene carbonate and ethylmethyl carbonate with each other at a volume ratio of 3:7.

### [Experimental example 1-2] Measurement of charge/discharge capacity and cycle life characteristic

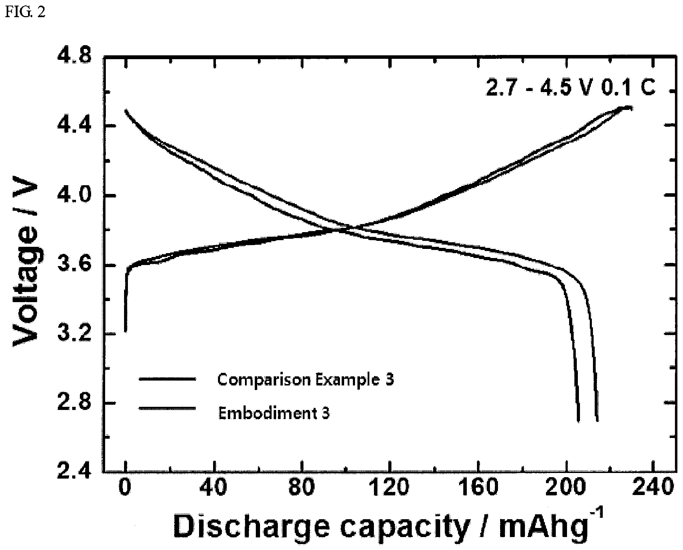

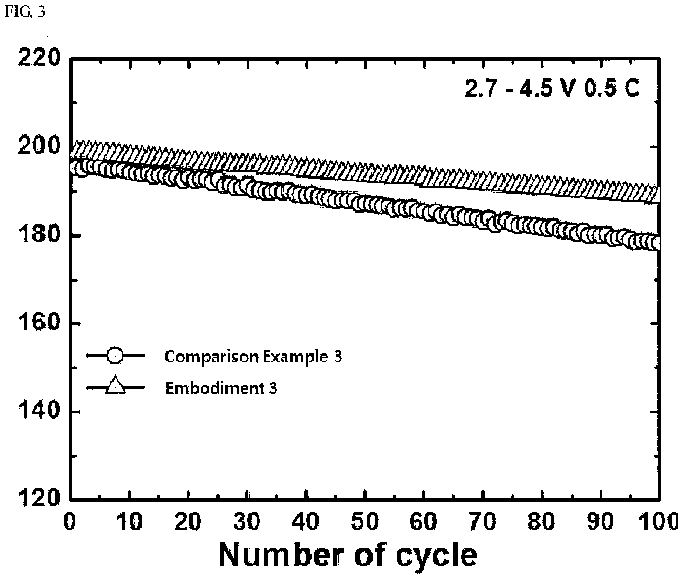

A charge/discharge test and a cycle life test were performed on the cells manufactured using the cathode active materials of the reference embodiments 1 to 12 and the comparison 1 to 8, and measured results were shown in FIGS. 2 and 3 and the following table 1.

The charge/discharge test was performed to each of the samples 10 times between 2.7V and 4.5V under a condition of 0.1C, and an average value was taken from the measured values. The cycle life test was performed to each of the samples 60 times or more between 2.7V and 4.5V under conditions of 0.5C and 25°C.

As shown in FIGS. 2 and 3 and the following table 1, the active materials of the reference embodiments including the PO₄ coating layers have excellent initial charge/discharge capacities and efficiency, compared with the active materials of the comparison examples not including the PO₄ coating layer. In addition, the active materials of the reference embodiments have excellent cycle life characteristic at 100 cycles.

**[Table 1]**

| Sample (Precursor) | 0.1C Discharge capacity (mAh/g) | 0.5C Cycle life characteristic (100^{th} cycle) | Sample (Precursor) | 0.1C Discharge capacity (mAh/g) | 0.5C Cycle life characteristic (100^{th} cycle) |
|---|---|---|---|---|---|
| Reference Embodiment 1 (Manufacture example 1) | 203.2 mAh/g | 91.7 % | Comparison example 1 (Manufacture example 1) | 198.4 mAh/g | 85.1 % |
| Reference Embodiment 2 (Manufacture example 2) | 208.9 mAh/g | 92.9 % | Comparison example 2 (Manufacture example 2) | 203.7 mAh/g | 88.8 % |
| Reference Embodiment 3 (Manufacture example 3) | 214.2 mAh/g | 94.8 % | Comparison example 3 (Manufacture example 3) | 205.6 mAh/g | 91.1 % |
| Reference Embodiment 4 (Manufacture example 4) | 221.1 mAh/g | 93.1 % | Comparison example 4 (Manufacture example 4) | 219.8 mAh/g | 87.2 % |
| Reference Embodiment 5 (Manufacture example 5) | 207.9 mAh/g | 89.1 % | Comparison example 5 (Manufacture example 5) | 205.4 mAh/g | 83.2 % |
| Reference Embodiment 6 (Manufacture example 6) | 213.7 mAh/g | 92.8 % | Comparison example 6 (Manufacture example 6) | 210.8 mAh/g | 86.7 % |
| Reference Embodiment 7 (Manufacture example 7) | 216.7 mAh/g | 94.3 % | Comparison example 7 (Manufacture example 7) | 215.2 mAh/g | 87.9 % |
| Reference Embodiment 8 (Manufacture example 8) | 213.4 mAh/g | 96.3 % | Comparison example 8 (Manufacture example 8) | 210.7 mAh/g | 92.6 % |
| Reference Embodiment 9 (Manufacture example 9) | 201.7 mAh/g | 92.8 % | | | |
| Reference Embodiment 10 | 212.5 mAh/g | 93.4 % | | | |
| Reference Embodiment 11 | 207.2 mAh/g | 96.9 % | | | |
| Reference Embodiment 12 | 214.2 mAh/g | 96.1 % | | | |

### [Experimental example 1-3] Measurement of thermal stability by DSC

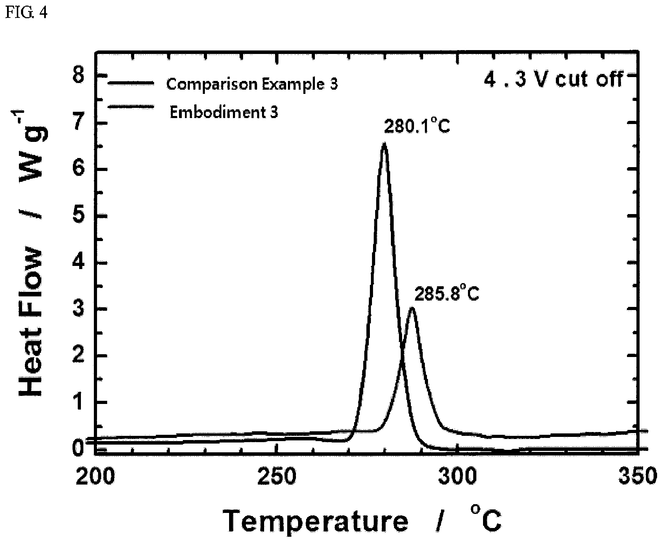

In a state that the cathode including each of the cathode active materials of the reference embodiments 1 to 12 and the comparison examples 1 to 8 was charged to 4.3V, the cathode was measured by a differential scanning calorimetry (DSC) analyzer while raising temperature at a rate of 10°C/min. The measured results were shown in FIG. 4 and the following table 2.

As shown in FIG. 4 and the following table 2, the active materials of the reference embodiments including the PO₄ coating layers have greatly improved thermal stability, compared with the active materials of the comparison examples not including the PO₄ coating layer.

**[Table 2]**

| Sample (Precursor) | DSC Temperature | Calorie | Sample | DSC Temperature | Calorie |
|---|---|---|---|---|---|
| Reference Embodiment 1 (Manufacture example 1) | 273.9 °C | 417.5 J/g | Comparison example 1 | 270.1 °C | 827.1 J/g |
| Reference Embodiment 2 (Manufacture example 2) | 277.1 °C | 363.8 J/g | Comparison example 2 | 271.9 °C | 793.6 J/g |
| Reference Embodiment 3 (Manufacture example 3) | 285.8 °C | 269.1 J/g | Comparison example 3 | 280.1 °C | 724.2 J/g |
| Reference Embodiment 4 (Manufacture example 4) | 270.2 °C | 402.7 J/g | Comparison example 4 | 265.7 °C | 811.4 J/g |
| Reference Embodiment 5 (Manufacture example 5) | 266.7 °C | 432.5 J/g | Comparison example 5 | 263.1 °C | 896.5 J/g |
| Reference Embodiment 6 (Manufacture example 6) | 278.1 °C | 387.4 J/g | Comparison example 6 | 273.8 °C | 791.8 J/g |
| Reference Embodiment 7 (Manufacture example 7) | 258.1 °C | 453.6 J/g | Comparison example 7 | 250.7 °C | 973.7 J/g |
| Reference Embodiment 8 (Manufacture example 8) | 279.3 °C | 327.8 J/g | Comparison example 8 | 276.1 °C | 772.4 J/g |
| Reference Embodiment 9 | 273.4 °C | 417.5 J/g | | | |
| Reference Embodiment 10 | 276.9 °C | 319.2 J/g | | | |
| Reference Embodiment 11 | 283.5 °C | 315.7 J/g | | | |
| Reference Embodiment 12 | 279.5 °C | 299.8 J/g | | | |

### [Experimental example 1-4] Measurement of residual lithium

100 ml distilled water was mixed with the active material (10g) of each of the reference embodiments 1 to 12 and the comparison 1 to 8, and then, the distilled water was filtered. The filtered distilled water of 50 ml was provided into a T50 apparatus of METLER TOLEDO international Inc., and a 10% aqueous hydrochloric acid solution was added little by little into the T50 apparatus to start titration. Two inflection points occurred after the titration. An added amount of the aqueous hydrochloric acid solution at the inflection point was measured to calculate the amount of residual lithium, and the results were shown in the following table 3.

**[Table 3]**

| Sample (Precursor) | Residual lithium | Sample | Residual lithium |
|---|---|---|---|
| Reference Embodiment 1 (Manufacture example 1) | 5327 ppm | Comparison example 1 | 7832 ppm |
| Reference Embodiment 2 (Manufacture example 2) | 4258 ppm | Comparison example 2 | 6325 ppm |
| Reference Embodiment 3 (Manufacture example 3) | 4125 ppm | Comparison example 3 | 5897 ppm |
| Reference Embodiment 4 (Manufacture example 4) | 6124 ppm | Comparison example 4 | 8972 ppm |
| Reference Embodiment 5 (Manufacture example 5) | 6974 ppm | Comparison example 5 | 9765 ppm |
| Reference Embodiment 6 (Manufacture example 6) | 5824 ppm | Comparison example 6 | 8265 ppm |
| Reference Embodiment 7 (Manufacture example 7) | 5158 ppm | Comparison example 7 | 6538 ppm |
| Reference Embodiment 8 (Manufacture example 8) | 4825 ppm | Comparison example 8 | 5614 ppm |
| Reference Embodiment 9 | 5187 ppm | | |
| Reference Embodiment 10 | 5987 ppm | | |
| Reference Embodiment 11 | 4724 ppm | | |
| Reference Embodiment 12 | 4698 ppm | | |

### [Embodiments 13 to 16] Manufacture of a cathode active material on which a ZrO₂ coating layer is formed

### [Embodiments 13 to 16] Formation of a ZrO₂ coating layer of 0.25 wt%

Zirconium acetatehydroxide ((CH₃CO₂)ₓZr(OH)_{y}, x+y=4), ZAH) was synthesized in a 4L CSTR under a condition of pH 8 and then was pulverized using a planetary mill to obtain nanometer-sized particles.

The obtained nano-particles of 0.25 wt% was mixed with lithium salts (LiOH and Li₂CO₃) and the cathode active material precursor (99.75 wt%) of each of the manufacture examples 5, 2, 7, and 4. A dry ball milling coating process was performed on each of these mixtures at a speed of 100 rpm for 12 hours. At this time, a used container had a volume of 50 ml, and zirconia balls were used. The used zirconia balls had one ball of a diameter of 10mm and three balls of a diameter of 5mm. The cathode active materials coated with the nano-particles were thermally treated at 500°C for 5 hours in an air atmosphere to manufacture cathode active materials coated with ZrO₂ of embodiments 13 to 16.

### [Embodiment 15-2] Formation of a ZrO₂ coating layer of 0.50 wt%

A cathode active material was manufactured by the same method as the embodiment 15 except for mixing the obtained nano-particles of 0.50 wt% with the cathode active material precursor (99.50 wt%) of the manufacture example 7.

### [Embodiment 15-3] Formation of a ZrO₂ coating layer of 0.75 wt%

A cathode active material was manufactured by the same method as the embodiment 15 except for mixing the obtained nano-particles of 0.75 wt% with the cathode active material precursor (99.25 wt%) of the manufacture example 7.

### [Embodiment 15-4] Formation of a ZrO₂ coating layer of 1.00 wt%

A cathode active material was manufactured by the same method as the embodiment 15 except for mixing the obtained nano-particles of 1.00 wt% with the cathode active material precursor (99.00 wt%) of the manufacture example 7.

### [Experimental example 2-1] XRD Measurement

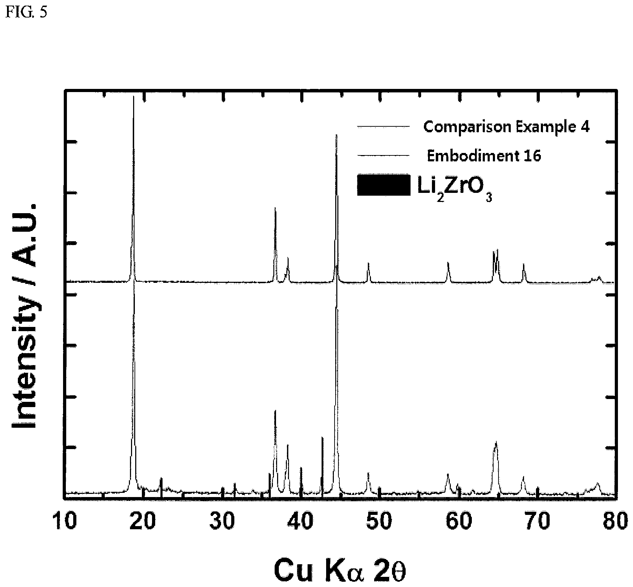

XRD measurement was performed to the cathode active materials manufactured in the embodiment 16 and the comparison example 4, and the results were shown in FIG. 5.

### [Experimental example 2-2] Measurement of cell characteristics according to the coating amount of ZrO₂

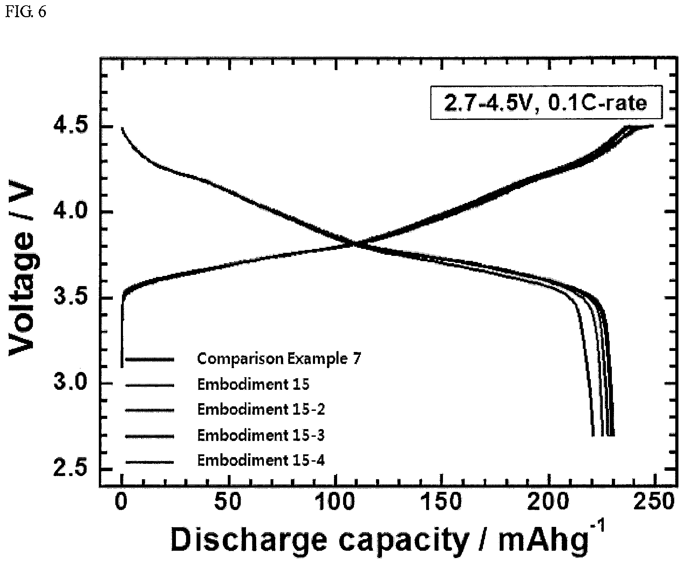

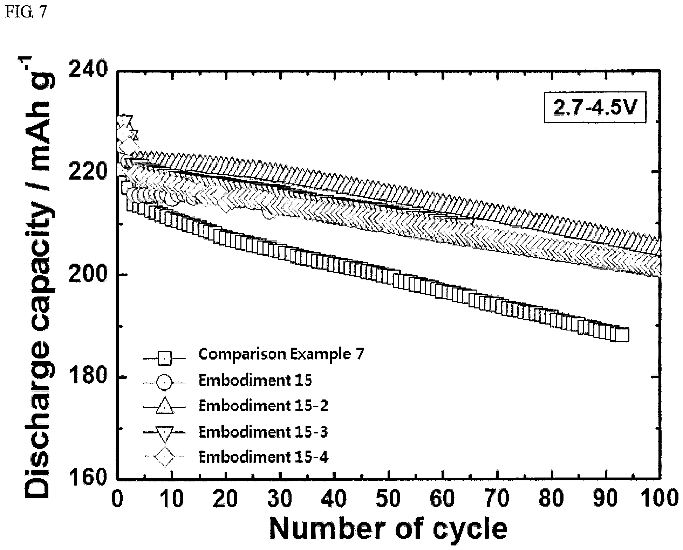

Cell characteristics of the embodiments 15 and 15-2 to 15-4 were measured, and the measured results were shown in FIGS. 6 and 7 and the following table 4.

**[Table 4]**

| Sample | 0.1C, 1st Discharge capacity (25 °C) | 1st Efficiency | 0.2C Capacity (mAh/g, 0.2C/0.1C) | 0.5C Capacity (mAh/g, 0.5C/0.1C) | 0.5C Cycle characteristic |
|---|---|---|---|---|---|
| Embodiment 15 | 225.2 mAh/g | 92.4 % | 222.2 (98.7%) | 215.6 (95.7%) | 93.8% (91^{th}) |
| Embodiment 15-2 | 229.5 mAh/g | 94.2 % | 227.7 (99.2%) | 222.1 (96.8%) | 93.0% (91^{th}) |
| Embodiment 15-3 | 230.1 mAh/g | 95.6 % | 227.2 (98.7%) | 221.7 (96.5%) | 94.6% (62^{th}) |
| Embodiment 15-4 | 227.7 mAh/g | 95.2 % | 225.3 (98.9%) | 219.9 (96.6%) | 92.3% (91^{th}) |
| Comparison example 7 | 220.6 mAh/g | 88.7 % | 217.0 (98.3%) | 213.8 (96.9%) | 87.9% (91^{th}) |

### [Experimental example 2-3] Measurement of charge/discharge capacity and cycle life characteristic

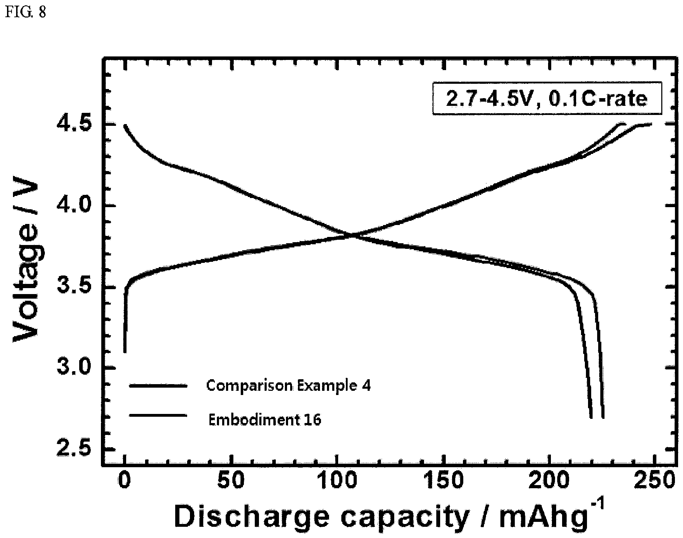

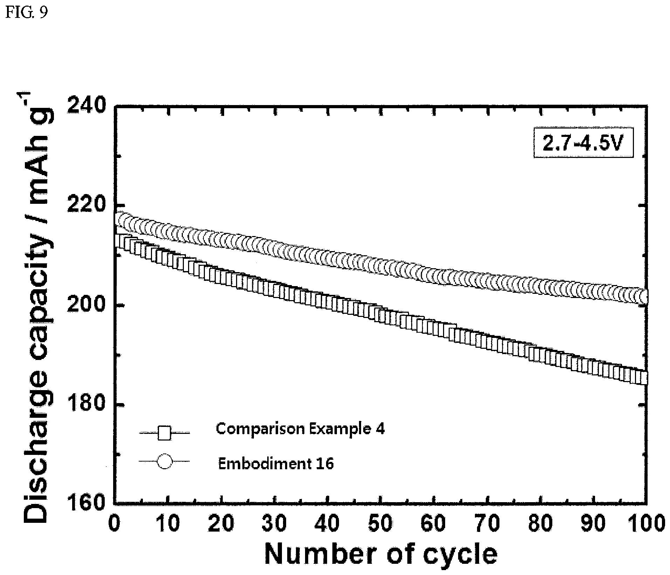

A charge/discharge test and a cycle life test were performed on a cell using each of the cathode active materials of the embodiments 13 to 16, and measured results were shown in FIGS. 8 and 9 and the following table 5.

**[Table 5]**

| Sample (Precursor) | 0.1C Discharge capacity (mAh/g) | 0.5C Cycle life characteristic (100^{th} cycle) | Sample | 0.1C Discharge capacity (mAh/g) | 0.5C Cycle life characteristic (100^{th} cycle) |
|---|---|---|---|---|---|
| Embodiment 13 (Manufacture example 5) | 206.9 mAh/g | 88.1 % | Comparison example 5 | 205.4 mAh/g | 83.2 % |
| Embodiment 14 (Manufacture example 2) | 207.6 mAh/g | 93.4 % | Comparison example 2 | 203.7 mAh/g | 88.8 % |
| Embodiment 15 (Manufacture example 7) | 217.8 mAh/g | 94.6 % | Comparison example 7 | 215.2 mAh/g | 87.9 % |
| Embodiment 16 (Manufacture example 4) | 225.5 mAh/g | 92.9 % | Comparison example 4 | 219.8 mAh/g | 87.2 % |

### [Experimental example 2-4] Measurement of residual lithium

The residual lithium amounts of the cathode active materials of the embodiments 13 to 16 were calculated using the same method as the experimental example 1-4, and the results were shown in the following table 6.

**[Table 6]**

| Sample (Precursor) | Residual lithium | Sample | Residual lithium |
|---|---|---|---|
| Embodiment 13 (Manufacture example 5) | 7992 ppm | Comparison example 5 | 9765 ppm |
| Embodiment 14 (Manufacture example 2) | 5128 ppm | Comparison example 2 | 6325 ppm |
| Embodiment 15 (Manufacture example 7) | 4984 ppm | Comparison example 7 | 6538 ppm |
| Embodiment 16 (Manufacture example 4) | 7777 ppm | Comparison example 4 | 8972 ppm |

### [Embodiments 17 and 18] Manufacture of a cathode active material on which a SeQ₃ coating layer is formed

Cathode active materials coated with SeO₃ of embodiments 17 and 18 were manufactured by the same method as the embodiment 1 except for using H₂SeO₃ as a coating precursor and using the active material precursors of the manufacture examples 6 and 9.

### [Experimental example 3-1] XRD Measurement

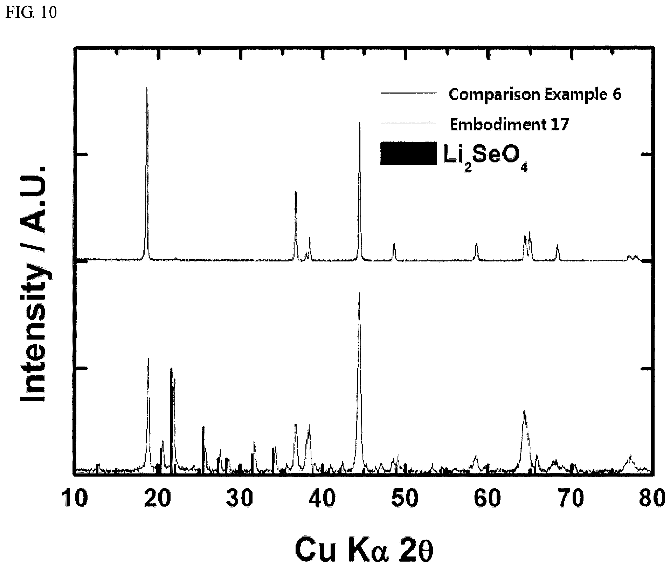

XRD measurement was performed to the cathode active materials manufactured in the embodiment 17 and the comparison example 6, and the results were shown in FIG. 10.

### [Experimental example 3-2] Measurement of charge/discharge capacity and cycle life characteristic

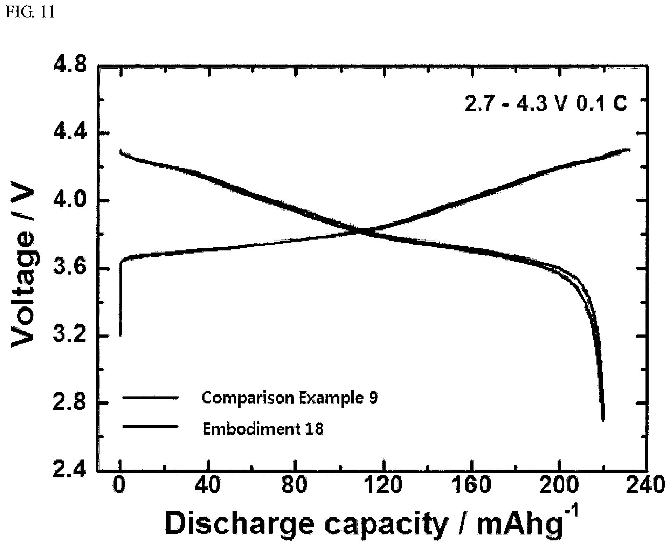

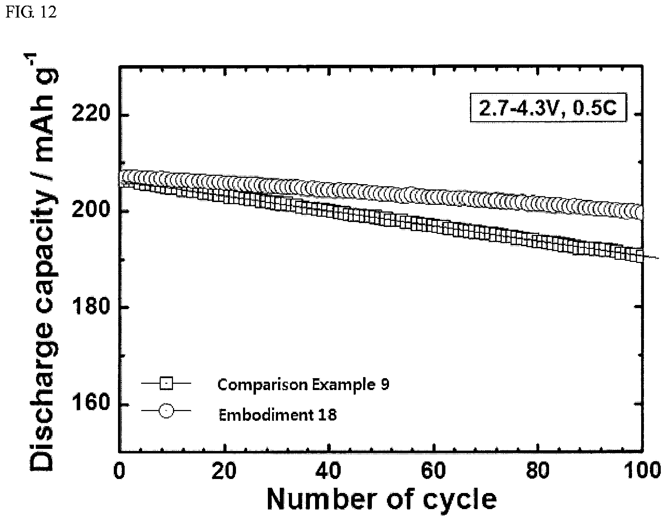

A charge/discharge test and a cycle life test were performed on a cell using each of the cathode active materials of the embodiments 17 and 18 and the comparison example 9, and measured results were shown in FIGS. 11 and 12 and the following table 7.

**[Table 7]**

| Sample (Precursor) | 0.1C Discharge capacity (mAh/g) | 0.5C Cycle life characteristic (100^{th} cycle) | Sample | 0.1C Discharge capacity (mAh/g) | 0.5C Cycle life characteristic (100^{th} cycle) |
|---|---|---|---|---|---|
| Embodiment 17 (Manufacture example 6) | 212.1 mAh/g | 92.9 % | Comparison example 6 | 202.7 mAh/g | 89.2 % |
| Embodiment 18 (Manufacture example 9) | 220.3 mAh/g | 96.3 % | Comparison example 9 | 219.5 mAh/g | 92.3 % |

### [Experimental example 3-3] Measurement of residual lithium

The residual lithium amounts of the cathode active materials of the embodiments 17 and 18 and the comparison example 9 were calculated using the same method as the experimental example 1-4, and the results were shown in the following table 8.

**[Table 8]**

| Sample (Precursor) | Residual lithium | Sample | Residual lithium |
|---|---|---|---|
| Embodiment 17 (Manufacture example 6) | 6982 ppm | Comparison example 6 | 8265 ppm |
| Embodiment 18 (Manufacture example 9) | 5771 ppm | Comparison example 9 | 7835 ppm |

### [Reference Embodiments 19 and 20] Manufacture of a cathode active material on which a SnO₂ coating layer is formed

Cathode active materials coated with SnO₂ of reference embodiments 19 and 20 were manufactured by the same method as the embodiment 1 except for using H₂SnO₃ as a coating precursor and using the active material precursors of the manufacture examples 7 and 9.

### [Experimental example 4-1] Measurement of charge/discharge capacity and cycle life characteristic

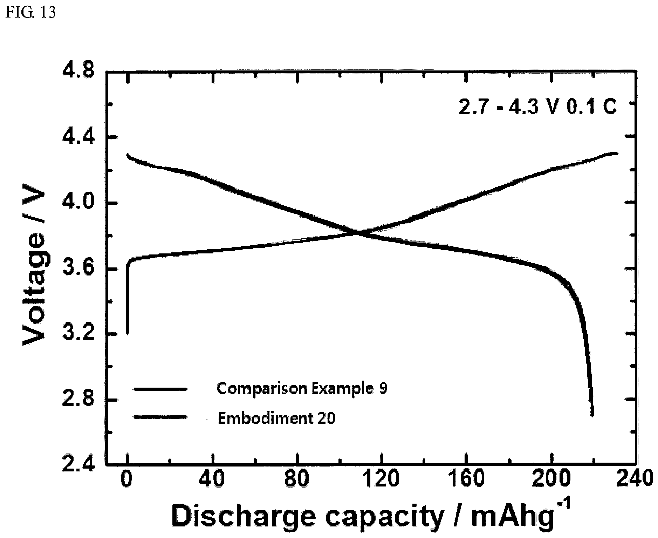

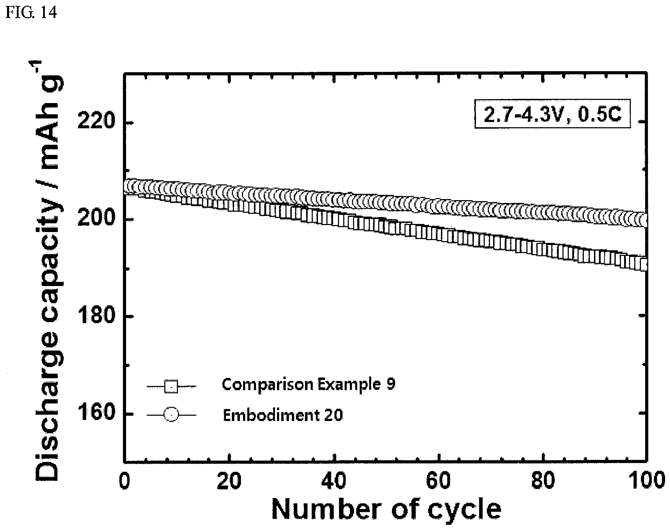

A charge/discharge test and a cycle life test were performed on a cell using each of the cathode active materials of the reference embodiments 19 and 20, and measured results were shown in FIGS. 13 and 14 and the following table 9.

**[Table 9]**

| Sample (Precursor) | 0.1C Discharge capacity (mAh/g) | 0.5C Cycle life characteristic (100^{th} cycle) | Sample | 0.1C Discharge capacity (mAh/g) | 0.5C Cycle life characteristic (100^{th} cycle) |
|---|---|---|---|---|---|
| Reference Embodiment 19 (Manufacture example 7) | 207.2 mAh/g | 92.8 % | Comparison example 7 | 206.7 mAh/g | 89.9 % |
| Reference Embodiment 20 (Manufacture example 9) | 220.3 mAh/g | 96.2 % | Comparison example 9 | 219.5 mAh/g | 92.3 % |

### [Experimental example 4-2] Measurement of residual lithium

The residual lithium amounts of the cathode active materials of the reference embodiments 19 and 20 and the comparison examples 6 and 9 were calculated using the same method as the experimental example 1-4, and the results were shown in the following table 10.

**[Table 10]**

| Sample (Precursor) | Residual lithium | Sample | Residual lithium |
|---|---|---|---|
| Reference Embodiment 19 (Manufacture example 7) | 4825 ppm | Comparison example 6 | 6538 ppm |
| Reference Embodiment 20 (Manufacture example 9) | 5813 ppm | Comparison example 9 | 7835 ppm |

### [Reference Embodiments 21 to 26] Manufacture of a cathode active material on which a PO₄ coating layer is formed

### [Reference Embodiments 21 and 22]

(NH₄)₂HPO₄ was synthesized in a 4L CSTR under a condition of pH 5 and then was pulverized using a planetary mill to obtain nanometer-sized particles.

Each of the active material precursors of the manufacture examples 1 and 3 and lithium hydroxide (LiOH) were mixed with each other at a molar ratio of 1.0:1.19, and then, a preliminary baking process was performed on the mixture. In the preliminary baking process, the mixture was heated at a heating rate of 2°C/min and was maintained at a temperature of 280°C for 5 hours. Thereafter, the mixture was baked at a temperature of 900°C for 10 hours to manufacture a cathode active material.

The obtained nano-particles of 0.25 wt% was mixed with the manufactured cathode active material of 99.75 wt% in a solvent (distilled water, methanol, or ethanol), and a wet coating process was performed at a speed 100 rpm for 12 hours. The cathode active materials coated with the nano-particles were thermally treated at 500°C for 5 hours in an air atmosphere to manufacture cathode active materials coated with PO₄ of reference embodiments 21 and 22.

### [Reference Embodiments 23 and 24]

Cathode active materials coated with PO₄ of reference embodiments 23 and 24 were manufactured by the same method as the reference embodiment 21 except for using NH₄PO₄ as a coating precursor and using the active material precursors of the manufacture examples 6 and 9.

### [Reference Embodiments 25 and 26]

Cathode active materials coated with PO₄ of reference embodiments 25 and 26 were manufactured by the same method as the embodiment 21 except for using H₃PO₄ as a coating precursor and using the active material precursors of the manufacture examples 7 and 9.

### [Experimental example 5-1] Measurement of charge/discharge capacity and cycle life characteristic

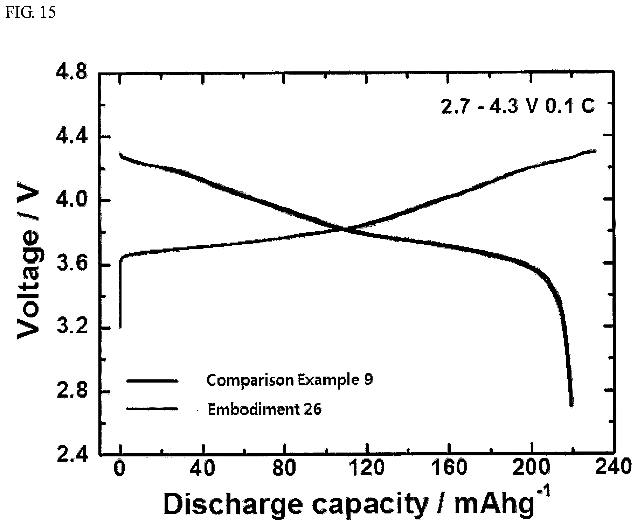

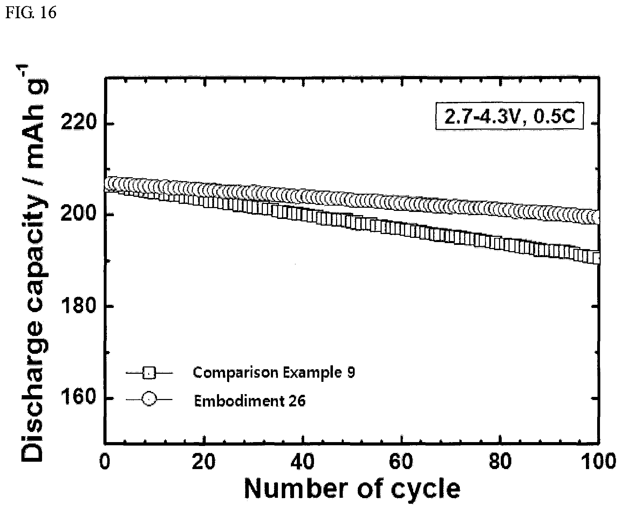

A charge/discharge test and a cycle life test were performed on a cell using each of the cathode active materials of the reference embodiments 21 to 26, and measured results were shown in FIGS. 15 and 16 and the following table 11.

**[Table 11]**

| Sample (Precursor) | 0.1C Discharge capacity (mAh/g) | 0.5C Cycle life characteristic (100^{th} cycle) | Sample | 0.1C Discharge capacity (mAh/g) | 0.5C Cycle life characteristic (100^{th} cycle) |
|---|---|---|---|---|---|
| Reference Embodiment 21 (Manufacture example 1) | 202.9 mAh/g | 91.9 % | Comparison example 1 | 198.4 mAh/g | 85.1 % |
| Reference Embodiment 22 (Manufacture example 3) | 209.2 mAh/g | 94.9 % | Comparison example 3 | 205.6 mAh/g | 91.1 % |
| Reference Embodiment 23 (Manufacture example 6) | 213.5 mAh/g | 93.0 % | Comparison example 6 | 210.8 mAh/g | 86.7 % |
| Reference Embodiment 24 (Manufacture example 9) | 220.1 mAh/g | 96.2 % | Comparison example 7 | 215.2 mAh/g | 87.9 % |
| Reference Embodiment 25 (Manufacture example 7) | 217.7 mAh/g | 94.7 % | Comparison example 9 | 219.5 mAh/g | 92.3 % |
| Reference Embodiment 26 (Manufacture example 9) | 220.2 mAh/g | 96.3 % | | | |

### [Experimental example 5-2] Measurement of residual lithium

The residual lithium amounts of the cathode active materials of the reference embodiments 21 to 26 were calculated using the same method as the experimental example 1-4, and the results were shown in the following table 12.

**[Table 12]**

| Sample (Precursor) | Residual lithium | Sample | Residual lithium |
|---|---|---|---|
| Reference Embodiment 21 (Manufacture example 1) | 5748 ppm | Comparison example 1 | 7832 ppm |
| Reference Embodiment 22 (Manufacture example 3) | 4426 ppm | Comparison example 3 | 5897 ppm |
| Reference Embodiment 23 (Manufacture example 6) | 6021 ppm | Comparison example 6 | 8265 ppm |
| Reference Embodiment 24 (Manufacture example 9) | 5921 ppm | Comparison example 7 | 6538 ppm |
| Reference Embodiment 25 (Manufacture example 7) | 4921 ppm | Comparison example 9 | 7835 ppm |
| Reference Embodiment 26 (Manufacture example 9) | 5798 ppm | | |

### [Embodiments 27 and 28] Manufacture of a cathode active material on which a SeQ₃ coating layer is formed

Cathode active materials coated with SeO₃ of embodiments 27 and 28 were manufactured by the same method as the embodiment 21 except for using H₂SeO₃ as a coating precursor and using the active material precursors of the manufacture examples 1 and 9.

### [Experimental example 6-1] Measurement of charge/discharge capacity and cycle life characteristic

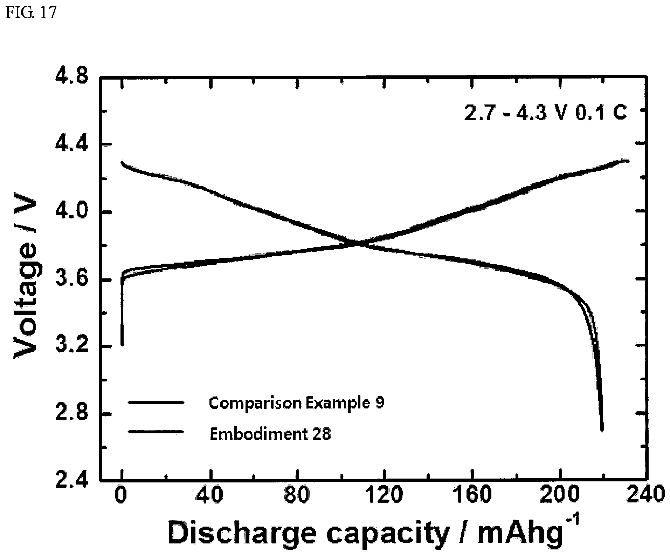

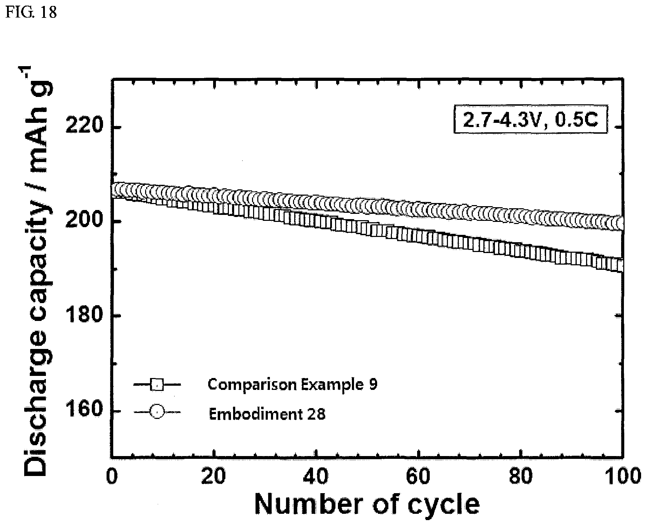

A charge/discharge test and a cycle life test were performed on a cell using each of the cathode active materials of the embodiments 27 and 28, and measured results were shown in FIGS. 17 and 18 and the following table 13.

**[Table 13]**

| Sample (Precursor) | 0.1C Discharge capacity (mAh/g) | 0.5C Cycle life characteristic (100^{th} cycle) | Sample | 0.1C Discharge capacity (mAh/g) | 0.5C Cycle life characteristic (100^{th} cycle) |
|---|---|---|---|---|---|
| Embodiment 27 (Manufacture example 1) | 204.0 mAh/g | 91.5 % | Comparison example 1 | 198.4 mAh/g | 85.1 % |
| Embodiment 28 (Manufacture example 9) | 219.8 mAh/g | 96.4 % | Comparison example 9 | 219.5 mAh/g | 92.3 % |

### [Experimental example 6-2] Measurement of thermal stability by DSC

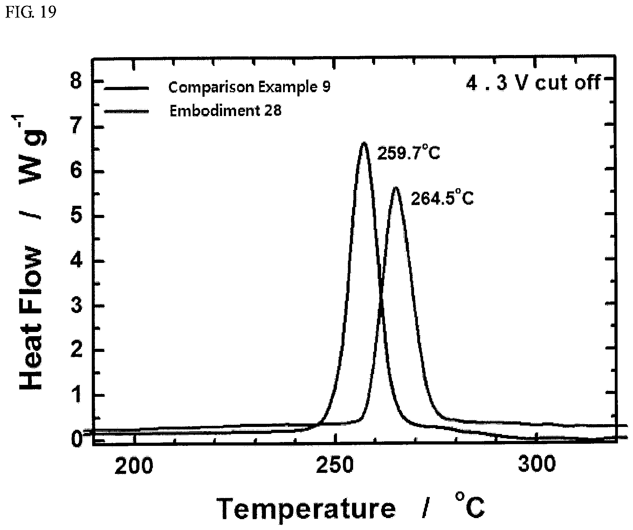

In a state that the cathode including each of the cathode active materials of the embodiments 27 and 28 and the comparison example 9 was charged to 4.3V, the cathode was measured by a DSC analyzer while raising temperature at a rate of 10°C/min. The measured results were shown in FIG. 19 and the following table 14.

**[Table 14]**

| Sample (Precursor) | DSC Temperature | Calorie | Sample (Precursor) | DSC Temperature | Calorie |
|---|---|---|---|---|---|
| Embodiment 27 (Manufacture example 1) | 289.6 °C | 315.1 J/g | Comparison example 1 | 284.3 °C | 503.5 J/g |
| Embodiment 28 (Manufacture example 9) | 264.5 °C | 709.0 J/g | Comparison example 9 | 259.7 °C | 797.5 J/g |

### [Experimental example 6-3] Measurement of residual lithium

The residual lithium amounts of the cathode active materials of the embodiments 27 and 28 were calculated using the same method as the experimental example 1-4, and the results were shown in the following table 15.

**[Table 15]**

| Sample (Precursor) | Residual lithium | Sample | Residual lithium |
|---|---|---|---|
| Embodiment 27 (Manufacture example 1) | 5919 ppm | Comparison example 1 | 7832 ppm |
| Embodiment 28 (Manufacture example 9) | 5517 ppm | Comparison example 9 | 7835 ppm |

### [Reference Embodiments 29 and 30] Manufacture of a cathode active material on which a SnO₂ coating layer is formed

Cathode active materials coated with SnO₂ of reference embodiments 29 and 30 were manufactured by the same method as the reference embodiment 21 except for using H₂SnO₃ as a coating precursor and using the active material precursors of the manufacture examples 6 and 3.

### [Experimental example 7-1] Measurement of charge/discharge capacity and cycle life characteristic

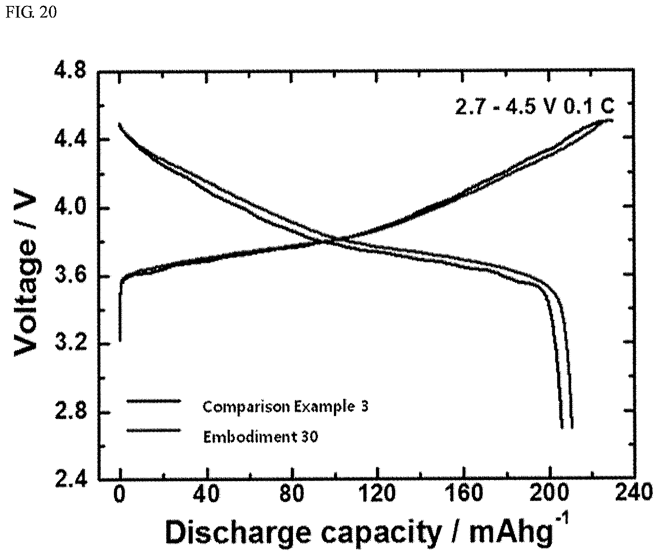

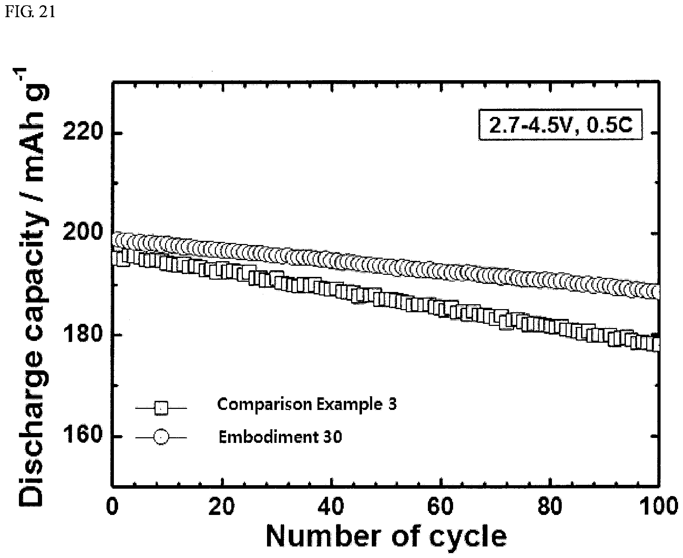

A charge/discharge test and a cycle life test were performed on a cell using each of the cathode active materials of the reference embodiments 29 and 30, and measured results were shown in FIGS. 20 and 21 and the following table 16.

**[Table 16]**

| Sample (Precursor) | 0.1C Discharge capacity (mAh/g) | 0.5C Cycle life characteristic (100^{th} cycle) | Sample | 0.1C Discharge capacity (mAh/g) | 0.5C Cycle life characteristic (100^{th} cycle) |
|---|---|---|---|---|---|
| Reference Embodiment 29 (Manufacture example 6) | 214.1 mAh/g | 92.5 % | Comparison example 6 | 210.8 mAh/g | 86.7 % |
| Reference Embodiment 30 (Manufacture example 3) | 210.3 mAh/g | 94.5 % | Comparison example 3 | 205.6 mAh/g | 91.1 % |

### [Experimental example 7-2] Measurement of residual lithium

The residual lithium amounts of the cathode active materials of the reference embodiments 29 and 30 were calculated using the same method as the experimental example 1-4, and the results were shown in the following table 17.

**[Table 17]**

| Sample (Precursor) | Residual lithium | Sample | Residual lithium |
|---|---|---|---|
| Reference Embodiment 29 (Manufacture example 6) | 6127 ppm | Comparison example 6 | 8265 ppm |
| Reference Embodiment 30 (Manufacture example 3) | 4687 ppm | Comparison example 3 | 5897 ppm |

### INDUSTRIAL APPLICABILITY

The cathode active material of the present invention includes at least one coating layer which includes a Li₂ZrO₃ or Li₂SeO₄ and is formed on the surface of the cathode active material, and thus, the stability and electrical conductivity of the cathode active material are improved. In addition, the battery including cathode active material has excellent charge/discharge and cycle life characteristics and excellent thermal stability.

## Claims

1. A cathode active material for a lithium secondary battery,
wherein at least one coating layer is formed on a surface of the cathode active material, the cathode active material comprising:
a core portion represented by the following chemical formula 1; and
a surface portion represented by the following chemical formula 2,
[chemical formula 1] Liₐ₁M1ₓ₁M2_{y1}M3_{z1}M4_{w}O_{2+δ},
[chemical formula 2] Liₐ₂M1ₓ₂M2_{y2}M3_{z2}M4_{w}O_{2+δ},
where, in the chemical formulas 1 and 2:
M1, M2, and M3 are selected from the group consisting of Ni, Co, Mn, and any combination thereof, M4 is selected from the group consisting of Fe, Na, Mg, Ca, Ti, V, Cr, Cu, Zn, Ge, Sr, Ag, Ba, Zr, Nb, Mo, Al, Ga, B, and any combination thereof;
0<a1≤1.1, 0<a2≤1.1, 0≤x1≤1, 0≤x2≤1, 0≤y1≤1, 0≤y2≤1, 0≤z1≤1, 0≤z2≤1, 0≤w≤0.1, 0.0≤δ≤0.5, 0<x1+y1+z1≤1, 0<x2+y2+z2≤1, y1≤y2, and z2≤z1;
0≤ |x2-x1| ≤0.4, 0.01≤ |y2-y1| ≤0.4, 0.1≤ |z2-z1| ≤0.5, 0.15≤x2≤0.35, 0.01≤y2≤0.3, and 0.5≤z2≤0.7; and
M1 is Co, M2 is Mn, and M3 is Ni; or
M1 is Mn, M2 is Co, and M3 is Ni; or
M1 is Ni, M2 is Co, and M3 is Mn;
**characterised in that** the coating layer includes Li₂ZrO₃ or Li₂SeO₄.

2. The cathode active material of claim 1, wherein a thickness of the coating layer is in a range of 1 nm to 150 nm.

3. The cathode active material of claim 1, wherein a thickness of the core portion is in a range of 10% to 70% of a total size of a particle of the cathode active material for the lithium secondary battery, and
wherein a concentration of metal ions from the core portion to the surface portion is represented by the chemical formula 2.

4. The cathode active material of claim 1, wherein a thickness of the core portion is in a range of 10% to 70% of a total size of a particle of the cathode active material for the lithium secondary battery,
wherein a thickness of the surface portion is in a range of 1% to 5% of the total size of the particle of the cathode active material for the lithium secondary battery, and
wherein concentrations of M1, M2, and M3 have continuous concentration gradients from the core portion to the surface portion.

5. The cathode active material of claim 1, wherein a thickness of the core portion and a thickness of the surface portion range from 1% to 5% of a total size of a particle of the cathode active material for the lithium secondary battery, and
wherein concentrations of M1, M2, and M3 have continuous concentration gradients from the core portion to the surface portion,
preferably wherein the concentrations of M1 and M2 have continuously increasing concentration gradients from the core portion to the surface portion, and
wherein the concentration of M3 has continuously decreasing concentration gradient from the core portion to the surface portion.

6. The cathode active material of claim 1, wherein a thickness of the core portion and a thickness of the surface portion range from 1% to 5% of a total size of a particle of the cathode active material for the lithium secondary battery,
wherein a concentration of M1 is uniform from the core portion to the surface portion, and
wherein concentrations of M2 and M3 have continuous concentration gradients from the core portion to the surface portion.

7. The cathode active material of claim 1, wherein a particle size of the cathode active material for the lithium secondary battery is in a range of 0.1 µm to 1 µm.

8. A method for manufacturing the cathode active material for the lithium secondary battery of claim 1, the method comprising:
synthesizing a coating layer source material;
forming a cathode active material precursor for a lithium secondary battery;
mixing the coating layer source material and lithium salt with the cathode active material precursor for the lithium secondary battery to form a mixture; and
baking the mixture.

9. A method for manufacturing the cathode active material for the lithium secondary battery of claim 1, the method comprising:
synthesizing a coating layer source material;
forming a cathode active material for a lithium secondary battery;
mixing the coating layer source material and the cathode active material with a solvent to form a mixture;
coating and drying the mixture; and
baking the coated and dried mixture.

10. The method of claim 9 or 10, wherein the coating layer source material is mixed at a ratio of 0.1 wt% to 1.00 wt% with respect to 100 wt% of the cathode active material,
preferably wherein the solvent is selected from a group consisting of distilled water, methanol, ethanol, and any combination thereof.

11. A lithium secondary battery comprising the cathode active material of claim 1.

## Patentansprüche

1. Kathodenaktives Material für einen Lithiumakkumulator,
wobei mindestens eine Beschichtungsschicht auf einer Oberfläche des kathodenaktiven Materials gebildet ist, wobei das kathodenaktive Material Folgendes umfasst:
einen Kernabschnitt, der durch die folgende chemische Formel 1 dargestellt ist; und einen Oberflächenabschnitt, der durch die folgende chemische Formel 2 dargestellt ist,
[chemische Formel 1] Liₐ₁M1ₓ₁M2_{y1}M3_{z1}M4_{w}O_{2+δ},
[chemische Formel 2] Liₐ₂M1ₓ₂M2_{y2}M3_{z2}M4_{w}O_{2+δ},
wobei in den chemischen Formeln 1 und 2:
M1, M2 und M3 ausgewählt sind aus der Gruppe bestehend aus Ni, Co, Mn, und jeder Kombination davon, M4 ausgewählt ist aus der Gruppe bestehend aus Fe, Na, Mg, Ca, Ti, V, Cr, Cu, Zn, Ge, Sr, Ag, Ba, Zr, Nb, Mo, Al, Ga, B und jeder Kombination davon;
0<a1≤1,1, 0<a2≤1,1, 0≤x1≤1, 0≤x2≤1, 0≤y1≤1, 0≤y2≤1, 0≤z1≤1, 0≤z2≤1, 0≤w≤0,1, 0,0≤δ≤0,5, 0<x1+y1+z1≤1, 0<x2+y2+z2≤1, y1≤y2 und z2≤z1;
0≤ |x2-x1| ≤0,4, 0,01≤ |y2-y1| ≤0,4, 0,1≤ |z2-z1| ≤0,5, 0,15≤x2≤0,35, 0,01≤y2≤0,3 und 0,5≤z2≤0,7; und
M1 Co ist, M2 Mn ist und M3 Ni ist; oder
M1 Mn ist, M2 Co ist und M3 Ni ist; oder
M1 Ni ist, M2 Co ist und M3 Mn ist;
**dadurch gekennzeichnet, dass** die Beschichtungsschicht Li₂ZrQ₃ oder Li₂SeO₄ beinhaltet.

2. Kathodenaktives Material nach Anspruch 1, wobei eine Stärke der Beschichtungsschicht in einem Bereich von 1 nm bis 150 nm ist.

3. Kathodenaktives Material nach Anspruch 1, wobei eine Stärke des Kernabschnitts in einem Bereich von 10 % bis 70 % einer Gesamtgröße eines Teilchens des kathodenaktiven Materials für den Lithiumakkumulator ist, und
wobei eine Konzentration von Metallionen von dem Kernabschnitt zu dem Oberflächenabschnitt durch die chemische Formel 2 dargestellt ist.

4. Kathodenaktives Material nach Anspruch 1, wobei eine Stärke des Kernabschnitts in einem Bereich von 10 % bis 70 % einer Gesamtgröße eines Teilchens des kathodenaktiven Materials für den Lithiumakkumulator ist,
wobei eine Stärke des Oberflächenabschnitts in einem Bereich von 1 % bis 5 % der Gesamtgröße der Partikel des kathodenaktiven Materials für den Lithiumakkumulator ist, und
wobei die Konzentrationen von M1, M2 und M3 kontinuierliche Konzentrationsgradienten von dem Kernabschnitt zu dem Oberflächenabschnitt aufweisen.

5. Kathodenaktives Material nach Anspruch 1, wobei eine Stärke des Kernabschnitts und eine Stärke des Oberflächenabschnitts im Bereich von 1 % bis 5 % einer Gesamtgröße eines Teilchens des kathodenaktiven Materials für den Lithiumakkumulator sind, und
wobei die Konzentrationen von M1, M2 und M3 kontinuierliche Konzentrationsgradienten von dem Kernabschnitt zu dem Oberflächenabschnitt aufweisen,
vorzugsweise wobei die Konzentrationen von M1 und M2 kontinuierlich steigende Konzentrationsgradienten von dem Kernabschnitt zu dem Oberflächenabschnitt aufweisen, und
wobei die Konzentration von M3 einen kontinuierlich abnehmenden Konzentrationsgradienten von dem Kernabschnitt zu dem Oberflächenabschnitt aufweist.

6. Kathodenaktives Material nach Anspruch 1, wobei eine Stärke des Kernabschnitts und eine Stärke des Oberflächenabschnitts im Bereich von 1 % bis 5 % einer Gesamtgröße eines Teilchens des kathodenaktiven Materials für den Lithiumakkumulator sind,
wobei eine Konzentration von M1 von dem Kernabschnitt bis zu dem Oberflächenabschnitt gleichförmig ist, und
wobei Konzentrationen von M2 und M3 kontinuierliche Konzentrationsgradienten von dem Kernabschnitt zu dem Oberflächenabschnitt aufweisen.

7. Kathodenaktives Material nach Anspruch 1, wobei eine Teilchengröße des kathodenaktives Materials für den Lithiumakkumulator in einem Bereich von 0,1 µm bis 1 µm ist.

8. Verfahren zur Herstellung des kathodenaktiven Materials für den Lithiumakkumulator nach Anspruch 1, wobei das Verfahren Folgendes umfasst:
Synthetisieren eines Beschichtungsschicht-Ausgangsmaterials;
Bilden eines kathodenaktiven Materialvorläufers für einen Lithiumakkumulator; Mischen des Beschichtungsschicht-Ausgangsmaterials und Lithiumsalzes mit dem kathodenaktiven Materialvorläufer für den Lithiumakkumulator zum Bilden eines Gemischs; und
Einbrennen des Gemischs.

9. Verfahren zur Herstellung des kathodenaktiven Materials für den Lithiumakkumulator nach Anspruch 1, wobei das Verfahren Folgendes umfasst:
Synthetisieren eines Beschichtungsschicht-Ausgangsmaterials;
Bilden eines kathodenaktiven Materials für einen Lithiumakkumulator;
Mischen des Beschichtungsschicht-Ausgangsmaterials und des aktiven Kathodenmaterials mit einem Lösungsmittel, um ein Gemisch zu bilden;
Beschichten und Trocknen des Gemischs; und
Einbrennen des beschichteten und getrockneten Gemischs.

10. Verfahren nach Anspruch 9 oder 10, wobei das Beschichtungsschicht-Ausgangsmaterial in einem Verhältnis von 0,1 Gew.-% bis 1,00 Gew.-%, bezogen auf 100 Gew.-% des aktiven Kathodenmaterials gemischt wird,
vorzugsweise wobei das Lösungsmittel ausgewählt ist aus einer Gruppe bestehend aus destilliertem Wasser, Methanol, Ethanol und einer beliebigen Kombination davon.

11. Lithiumakkumulator, umfassend das kathodenaktive Material nach Anspruch 1.

## Revendications

1. Matériau actif de cathode pour une batterie secondaire lithium,
au moins une couche de revêtement étant formée sur une surface du matériau actif de cathode, le matériau actif de cathode comprenant :
une partie de coeur représentée par la formule chimique 1 suivante ; et
une partie de surface représentée par la formule chimique 2 suivante,
[formule chimique 1] Liₐ₁M1ₓ₁M2_{y1}M3_{z1}M4_{w}O_{2+δ},
[formule chimique 2] Liₐ₂M1ₓ₂M2_{y2}M3_{z2}M4_{w}O_{2+δ},
où, dans les formules chimiques 1 et 2 :
M1, M2 et M3 sont choisis dans le groupe constitué par Ni, Co, Mn et l'une quelconque de leurs combinaisons, M4 est choisi dans le groupe constitué par Fe, N, Mg, Ca, Ti, V, Cr, Cu, Zn, Ge, Sr, Ag, Ba, Zr, Nb, Mo, Al, Ga, B, et l'une quelconque de leurs combinaisons ;
0<a1≤1,1, 0<a2≤1,1, 0≤x1≤1, 0≤x2≤1, 0≤y1≤1, 0≤y2≤1, 0≤z1≤1, 0≤z2≤1, 0≤w≤0,1, 0,0≤δ≤0,5, 0<x1+y1+z1≤1, 0<x2+y2+z2≤1, y1≤y2 et z2≤z1;
0≤ |x2-x1| ≤0,4, 0,01≤ |y2-y1| ≤0,4, 0,1≤ |z2-z1| ≤0,5, 0,15≤x2≤0,35, 0,01≤y2≤0,3 et 0,5≤z2≤0,7 ; et
M1 est Co, M2 est Mn et M3 est Ni ; ou
M1 est Mn, M2 est Co et M3 est Ni ; ou
M1 est Ni, M2 est Co et M3 est Mn ;
**caractérisé en ce que** la couche de revêtement comprend Li₂ZrO₃ ou Li₂SeO₄.

2. Matériau actif de cathode de la revendication 1, dans lequel une épaisseur de la couche de revêtement se situe dans une plage de 1 nm à 150 nm.

3. Matériau actif de cathode la revendication 1, dans lequel l'épaisseur de la partie de coeur se situe dans une plage de 10 % à 70 % d'une taille totale d'une particule du matériau actif de cathode pour la batterie secondaire lithium, et
dans lequel une concentration d'ions métalliques de la partie de coeur à la partie de surface est représentée par la formule chimique 2.

4. Matériau actif de cathode de la revendication 1, dans lequel une épaisseur de la partie de coeur se situe dans une plage de 10 % à 70 % d'une taille totale d'une particule du matériau actif de cathode pour la batterie secondaire lithium,
dans lequel une épaisseur de la partie de surface se situe dans une plage de 1 % à 5 % de la taille totale de la particule du matériau actif de cathode pour la batterie secondaire lithium, et
dans lequel les concentrations de M1, M2 et M3 présentent des gradients de concentration continus de la partie de coeur à la partie de surface.

5. Matériau actif de cathode de la revendication 1, dans lequel une épaisseur de la partie de coeur et une épaisseur de la partie de surface se situent dans une plage de 1 % à 5 % d'une taille totale d'une particule du matériau actif de cathode pour la batterie secondaire lithium, et
dans lequel les concentrations de M1, M2 et M3 présentent des gradients de concentration continus de la partie de coeur à la partie de surface,
de préférence dans lequel la concentration de M3 présente un gradient de concentration décroissant de la partie de coeur à la partie de surface.

6. Matériau actif de cathode de la revendication 1, dans lequel une épaisseur de la partie de coeur et une épaisseur de la partie de surface se situent dans une plage de 1 % à 5 % d'une taille totale d'une particule du matériau actif de cathode pour la batterie secondaire lithium,
dans lequel une concentration de M1 est uniforme de la partie de coeur à la partie de surface, et
dans lequel les concentrations de M2 et M3 présentent des gradients de concentration continus de la partie de coeur à la partie de surface.

7. Matériau actif de cathode de la revendication 1, dans lequel une taille de particule du matériau actif de cathode pour la batterie secondaire lithium se situe dans une plage de 0,1 µm à 1 µm.

8. Procédé de fabrication du matériau actif de cathode pour batterie secondaire lithium de la revendication 1, le procédé comprenant :
la synthèse d'un matériau source de couche de revêtement ;
la formation d'un précurseur de matériau actif de cathode pour une batterie secondaire lithium ;
le mélange du matériau source de couche de revêtement et d'un sel de lithium avec le précurseur de matériau actif de cathode pour la batterie secondaire lithium pour former un mélange ; et
la cuisson du mélange.

9. Procédé de fabrication du matériau actif de cathode pour batterie secondaire lithium de la revendication 1, le procédé comprenant :
la synthèse d'un matériau source de couche de revêtement ;
la formation d'un matériau actif de cathode pour une batterie secondaire lithium ;
le mélange du matériau source de couche de revêtement et du matériau actif de cathode avec un solvant pour former un mélange ;
le dépôt et le séchage du mélange ; et
la cuisson du mélange déposé et séché.

10. Procédé de la revendication 9 ou 10, dans lequel le matériau source de couche de revêtement est mélangé selon un rapport de 0,1 % en poids à 1,00 % en poids par rapport à 100 % en poids du matériau actif de cathode,
le solvant étant de préférence choisi dans un groupe constitué par l'eau distillé, le méthanol, l'éthanol et l'une quelconque de leurs combinaisons.

11. Batterie secondaire au lithium comprenant le matériau actif de cathode de la revendication 1.
